# EUROPÄISCHE PATENTANMELDUNG

(11) **EP 4 116 264 A1**
(43) Veröffentlichungstag der Anmeldung: **11.01.2023**
(21) Anmeldenummer: 21183664.8
(22) Anmeldetag: 05.07.2021
(51) Int. Cl.: C02F 1/42, C02F 1/44, B01J 49/75, B01J 49/80, B01D 61/02, B01D 61/04, C02F 1/20

(54) **VERFAHREN UND VORRICHTUNG ZUR WASSERAUFBEREITUNG MITTELS IONENAUSTAUSCHER MIT REGENERATION MIT CO2**

(71) Anmelder: Veolia Water Technologies Deutschland GmbH, 29227 Celle (DE)
(72) Erfinder: Sauer, Uwe, 95326 Kulmbach (DE)
(74) Vertreter: Patentanwaltskanzlei Methling

(57) **Zusammenfassung**

Die Erfindung betrifft ein Verfahren zur Enthärtung und/oder Entsalzung von Wasser mittels Ionenaustauscher, wobei Rohwasser zumindest einen lonenaustauscherfilter (3) enthaltend Ionenaustauscher im Filterbetrieb durchströmt und das aufzubereitende Rohwasser mittels des Ionenaustauschers teilenthärtet und/oder teilentsalzt wird, wobei regelmäßig eine Regeneration des lonenaustauscherfilters (3) mittels einer im Regenerationsbetrieb rückwärts gerichteten Durchströmung des lonenaustauscherfilters (3) mit zumindest CO₂-haltigem Wasser durchgeführt wird, dadurch gekennzeichnet, dass das bei der Regeneration des lonenaustauscherfilters (3) anfallende CO₂-haltige Abwasser mittels einer im Regenerationsbetrieb nachgeschalteten Regenerierwassermembranentsalzung (6) aufbereitet wird und das CO₂-haltige Wasser der Reinwasserseite der Regenerierwassermembranentsalzung (6) auf die Rohwasserseite der Regeneration zurückgeführt und das bei der Regeneration nicht verbrauchte CO₂ mit dem CO₂-haltigen Wasser im Kreislauf geführt wird. Ferner betrifft die Erfindung eine Vorrichtung zur Enthärtung und/oder Entsalzung von Wasser mittels Ionenaustauscher.

## Beschreibung

Die Erfindung betrifft ein Verfahren zur Enthärtung und/oder Entsalzung von Wasser mittels Ionenaustauscher, wobei Rohwasser zumindest einen lonenaustauscherfilter enthaltend Ionenaustauscher im Filterbetrieb durchströmt und das aufzubereitende Rohwasser mittels des Ionenaustauschers teilenthärtet und/oder teilentsalzt wird, wobei regelmäßig eine Regeneration des lonenaustauscherfilters mittels einer im Regenerationsbetrieb rückwärts gerichteten Durchströmung des lonenaustauscherfilters mit zumindest CO₂-haltigem Wasser durchgeführt wird.

Die Erfindung betrifft ferner eine Vorrichtung zur Enthärtung und/oder Entsalzung von Wasser mittels Ionenaustauscher, wobei die Vorrichtung zumindest einen lonenaustauscherfilter aufweist, der im Filterbetrieb von Rohwasser vorwärts durchströmt wird und wobei und das aufzubereitende Rohwasser mittels des Ionenaustauschers teilenthärtet und/oder teilentsalzt wird, wobei regelmäßig eine Regeneration des lonenaustauscherfilters mittels einer rückwärts gerichteten Durchströmung des lonenaustauscherfilters mit zumindest CO₂-haltigem Wasser durchgeführt wird.

Derartige Verfahren und Vorrichtungen sind aus der DE 198 01 174 A1 und der DE 10 2006 050 608 A1 bekannt.

Ionenaustauscher bzw. damit gleichbedeutend lonenaustauscherharze sind Kunststoffkugeln mit einem Durchmesser von beispielsweise 0,8 mm auf denen unbewegliche Ionen permanent chemisch angebracht sind. Die Begriffe Ionenaustauscher und lonenaustauscherharz werden im Sinne der Erfindung synonym verwendet. Dieses Ion ist ein Bestandteil der Harzstruktur und heißt Aktivgruppe. Damit das Harz seine elektrische Neutralität behält, muss jedes dieser unbeweglichen Ionen durch ein Gegenion ins Gleichgewicht gebracht werden. Diese Gegenionen können innerhalb sowie zwischen den Harzkugeln und dem umhüllenden Wasser hin und her wandern. Eingefüllt sind die lonenaustauscherharze in Druckkessel und werden von oben nach unten mit dem Wasser durchströmt. Bei dem sogenannten Beladungsvorgang tauschen die Harze diese frei beweglichen Ionen gegen die höher wertigeren Kationen (Ca, Mg) und Anionen (SO4, NO3, Cl) aus dem Rohwasser. Sind alle Plätze auf dem Austauscher besetzt, so muss dieser Vorgang durch eine Regeneration umgekehrt werden. Die Regeneration der lonenaustauscherharze kann vorteilhaft mit dem bei der Beladung entstehenden Produkt Kohlenstoffdioxid CO2 durchgeführt werden.

Bei der Regeneration wird Rohwasser über eine Regenerierpumpe in einen Regenerierspeicher gepumpt und unter einem bestimmten Überdruck mit CO2 angereichert. Vom Regenerierspeicher wird diese Regenerierlösung von unten nach oben durch den Ionenaustauscher gedrückt. Das salzhaltige Abwasser (Eluat), wird anschließend im Eluatengaser bei Atmosphäre oder Unterdruck verdüst. In der Gasphase des Elauentgasers wird mit einem ölfrei verdichtenden Aggregat ca. 80 bis 98% des CO2 angesaugt und in den Regenerierspeicher zurückgeführt.

Nachteilig dabei ist der sehr hohe Energieaufwand zur Rückgewinnung des in dem salzhaltigen Abwasser der Regeneration enthaltenen Kohlendioxid CO₂.

Die Aufgabe der Erfindung ist es, ein verbessertes Verfahren und eine verbesserte Vorrichtung anzugeben, um einen energiesparenden Betrieb zur Rückgewinnung des in dem salzhaltigen Abwasser der Regeneration enthaltenen Kohlendioxid CO₂ zu ermöglichen.

Diese Aufgabe wird erfindungsgemäß durch das Verfahren gemäß Anspruch 1 und die Vorrichtung gemäß Anspruch 11 gelöst. Vorteilhafte Weiterbildungen der Erfindung sind in den abhängigen Ansprüchen angegeben.

Besonders vorteilhaft bei dem Verfahren zur Enthärtung und/oder Entsalzung von Wasser mittels Ionenaustauscher, wobei Rohwasser zumindest einen lonenaustauscherfilter enthaltend Ionenaustauscher im Filterbetrieb durchströmt und das aufzubereitende Rohwasser mittels des Ionenaustauschers teilenthärtet und/oder teilentsalzt wird, wobei regelmäßig eine Regeneration des lonenaustauscherfilters mittels einer im Regenerationsbetrieb rückwärts gerichteten Durchströmung des lonenaustauscherfilters mit zumindest CO₂-haltigem Wasser durchgeführt wird, ist es, dass das bei der Regeneration des lonenaustauscherfilters anfallende CO₂-haltige Abwasser mittels einer im Regenerationsbetrieb nachgeschalteten Regenerierwassermembranentsalzung aufbereitet wird und das CO₂-haltige Wasser der Reinwasserseite der Regenerierwassermembranentsalzung auf die Rohwasserseite der Regeneration zurückgeführt und das bei der Regeneration nicht verbrauchte CO₂ mit dem CO₂-haltigen Wasser im Kreislauf geführt wird.

Das Verfahren kann dabei insbesondere zur Trinkwasseraufbereitung oder zur Prozesswasseraufbereitung in industriellen Prozessen sowie in der Lebensmittelproduktion angewendet werden.

Das bei einer Regeneration anfallende stark CO₂ haltige Abwasser (Eluat) wird dabei mittels einer Regenerierwassermembranentsalzung aufbereitet. Diese Membranen halten gelöste Ionen zurück, lassen aber gelöste Gase wie etwa CO₂ frei passieren. Deshalb sind die CO₂-Gehalte auf der Roh-, Reinwasserund Konzentratseite in etwa gleich hoch. Das Permeat wird auf die Rohwasserseite der Regeneration zurückgeführt und damit das bei der Regeneration nicht verbrauchte CO₂ im Kreislauf gefahren. Das Konzentrat der Membrananlage wird über den Eluatengaser geführt und für diesen dann deutlich kleineren Teilstrom wird die CO₂ mittels ölfrei verdichtender Aggregate in den Regenerierspeicher zurückgeführt.

Somit wird das bei der Regeneration des lonenaustauscherfilters anfallende CO₂-haltige Abwasser (Eluat) mittels einer im Regenerationsbetrieb nachgeschalteten Regenerierwassermembranentsalzung aufbereitet und das CO₂-haltige Wasser der Reinwasserseite der Regenerierwassermembranentsalzung, die als Salzsenke fungiert und somit eine Akkumulation von Salzen während der Regeneration verhindert, wird auf die Rohwasserseite der Regeneration zurückgeführt und somit das bei der Regeneration nicht verbrauchte CO2 aus dem Eluat im Kreislauf geführt.

Da die Bereitstellung und Rückgewinnung von CO₂ sehr kostenaufwendig ist, ist es besonders vorteilhaft, dass während der Durchführung einer Regeneration des Ionenaustauschers aus dem immer noch stark CO₂-haltigen Eluat CO₂ in einem Kreislauf geführt bzw. aus einem kleinen Teilstrom zurückgewonnen wird.

Da somit nur noch ein deutlich kleinerer Teilstrom CO₂ mittels ölfrei verdichtender Aggregate rückgewonnen und in den Regenerierspeicher zurückgeführt werden muss, ergibt sich eine erhebliche Energieeinsparung gegenüber dem Stand der Technik. Verglichen mit einer konventionellen Regeneration mit CO₂ nach dem Stand der Technik wird der Abwasseranfall wird um bis zu 70% reduziert, der CO₂ Verbrauch wird um bis zu 30% reduziert und der Energieverbrauch wird um bis zu 40% reduziert.

Vorzugsweise wird das Abwasser der Regenerierwassermembranentsalzung mittels eines nachgeschalteten Eluatentgasers entgast, wobei in der Gasphase des Eluatentgasers mittels eines Verdichters zumindest ein Teil des CO₂ angesaugt und in einen Regenerierspeicher eingeleitet wird

Vorzugsweise wird als Ionenaustauscher ein schwach saurer Kationenaustauscher oder ein stark basischer Anionenaustauscher oder eine Mischung aus einem schwach sauren Kationenaustauscher und einem stark basischen Anionenaustauscher eingesetzt.

Sofern eine Mischung aus schwach sauren Kationenaustauschern und stark basischen Anionenaustauschern zum Einsatz kommt, kann das Mischungsverhältnis im Bereich von 100 : 1 bis zu 1 : 100 liegen. Hierdurch ist es möglich, den Ionenaustauscher den jeweiligen Anforderungen anzupassen, d.h. das Mischungsverhältnis zwischen schwach saurem Kationenaustauscher und stark basischen Anionenaustauscher der Rohwasserqualität und insbesondere der Beladung des Rohwassers mit Spurenelementen anzupassen.

Vorzugsweise handelt es sich bei der Regenerierwassermembranentsalzung um eine Nanofiltration und/oder um eine Umkehrosmose. Diese Membranen halten gelöste Ionen zurück, lassen aber gelöste Gase wie etwa CO₂ frei passieren.

Bevorzugt wird das zur Regeneration verwendete Rohwasser vor der Einleitung in den lonenaustauscherfilter, insbesondere unter einem Überdruck in einem Regenerierspeicher, mit CO₂ angereichert. Durch die Anreicherung mit CO₂ wird die Wirkung der Regeneration der lonenaustauscherharze verbessert. Mit dem Begriff des lonenaustauscherfilters ist jene Baugruppe bezeichnet, die einen durchströmbaren Behälter enthaltend lonenaustauscherharze umfasst.

Vorzugsweise sind mehrere lonenaustauscherfilter parallelgeschaltet und zumindest ein lonenaustauscherfilter wird im Filterbetrieb vorwärts von Rohwasser durchströmt und zumindest ein anderer lonenaustauscherfilter wird gleichzeitig im Regenerationsbetrieb von CO₂-haltigem Wasser rückwärts durchströmt und regeneriert.

Es können somit mehrere, insbesondere zwei oder drei oder vier oder mehr jeweils eine lonenaustauscherschüttung enthaltende lonentauscherfilter parallelgeschaltet sein. Insbesondere kann dabei zumindest ein lonenaustauscherfilter zur Wasseraufbereitung eingesetzt werden, während gleichzeitig zumindest ein anderer lonenaustauscherfilter regeneriert und/oder rückgespült wird.

Durch die Anordnung mehrerer parallel geschalteter lonenaustauscherfilter kann der Dauerbetrieb der Anlage gewährleistet werden, indem beispielsweise bei Anordnung von drei parallel geschalteten lonenaustauscherfiltern jeweils ein lonenaustauscherfilter im Einsatz ist, während ein weiterer lonenaustauscherfilter regeneriert und rückgespült wird und der dritte lonenaustauscherfilter nach durchgeführter Regeneration und Rückspülung in Wartestellung ist.

Vorzugsweise wird im Filterbetrieb mittels einer dem lonenaustauscherfilter nachgeschalteten Reinwassermembranentsalzung ein Teil- oder Vollstrom des Reinwassers aufbereitet, wobei das CO₂-haltige Abwasser dieser Reinwassermembranentsalzung zur Regeneration eines lonenaustauscherfilters verwendet wird, insbesondere in einen Regenerierspeicher eingeleitet wird.

Das Rohwasser wird mittels Ionenaustauscher entsalzt (Einsatz von Kationenund Anionenharz) oder enthärtet (Einsatz von Kationenharz). Bei dieser Beladung entsteht Kohlenstoffdioxid CO₂. Ein Teil- oder Vollstrom dieses vorentsalzten oder enthärteten Wassers geht anschließend auf eine Reinwassermembranentsalzung. Das Reinwasser (Permeat) dieser Membrananlage wird dem Reinwasserstrom der Gesamtanlage zugeführt und das Abwasser (Konzentrat) wird beispielsweise zur Regeneration eines in der Anlage parallelgeschalteten Ionenaustauschers, der im Regenerationsbetrieb ist, wiederverwendet.

Vorzugsweise handelt es sich bei der Reinwassermembranentsalzung um eine Nanofiltration und/oder um eine Umkehrosmose.

Vorzugsweise wird der Ionenaustauscher in Form einer lonenaustauscherschüttung verwendet, mittels dessen Feststoffe aus dem Rohwasser gefiltert werden, die bei einer Regeneration und Rückspülung des Ionenaustauschers ausgespült und als Abwasser abgeführt werden.

Besonders bevorzugt erfolgt eine Überwachung der elektrischen Leitfähigkeit des Reinwassers des lonenaustauscherfilters und es wird eine Regeneration des lonenaustauscherfilters bei Überschreitung eines festlegbaren Grenzwertes der elektrischen Leitfähigkeit des lonentauscherablaufs ausgelöst.

Mit dem Begriff des lonentauscherablaufs ist dabei das aus dem lonenaustauscherfilter austretende Wasser auf der Reinwasserseite nach der Behandlung des Rohwassers mit dem Ionenaustauscher gemeint.

In einer bevorzugten Ausführungsform des erfindungsgemäßen Verfahrens erfolgt eine Aufteilung des aufzubereitenden Rohwassers in zwei oder mehrere Teilströme.

Vorzugweise wird ein erster Teilstrom des aufzubereitenden Rohwassers mittels des Ionenaustauschers behandelt, wobei ein zweiter Teilstrom von bis zu 90 % des Rohwassers über einen Bypass geführt und die beiden Teilströme auf der Reinwasserseite vermischt werden, wobei der Anteil des über den Bypass geleiteten Teilstromes in Abhängigkeit der elektrischen Leitfähigkeit des Rohwassers und/oder in Abhängigkeit der elektrischen Leitfähigkeit des lonentauscherablaufs und/oder in Abhängigkeit der elektrischen Leitfähigkeit des Reinwassers nach der Vermischung der beiden Teilströme geregelt wird.

Hierdurch ist eine geregelte Bypassfahrweise möglich. Dabei wird der Anteil des Rohwassers, welcher über den Bypass geleitet wird, innerhalb eines geschlossenen Regelkreises in Abhängigkeit der Wasserqualität des Rohwassers und/oder des lonentauscherablaufs und/oder des Reinwassers geregelt. Hierdurch ist in Abhängigkeit von der Rohwasserqualität eine entsprechende Energieoptimierung der gesamten Anlagenfahrweise möglich, indem bei guter Rohwasserqualität lediglich ein Teilstrom des aufzubereitenden Rohwassers mittels des Ionenaustauschers behandelt wird, während ein zweiter Teilstrom von bis zu 90% des Rohwassers über einen Bypass geführt wird.

In Abhängigkeit von der Rohwasserqualität kann der erste Teilstrom bis zu 100 % entsprechend einer vollständigen Behandlung des aufzubereitenden Rohwassers betragen. Der zweite Teilstrom, welcher über den Bypass geführt und mit dem lonentauscherablauf vermischt wird, kann bis zu 10 %, insbesondere bis zu 20 %, insbesondere bis zu 30 %, insbesondere bis zu 40 %, insbesondere bis zu 50 %, insbesondere bis zu 60 %, insbesondere bis zu 70 %, insbesondere bis zu 80 %, insbesondere bis zu 90 % des Rohwassermassenstromes betragen.

Ferner kann ein Spülluftgebläse zur Auflockerung der lonenaustauscherharzschüttung und zur Wiederherstellung eines homogenen Mischbettes vorgesehen sein. Vorzugsweise wird eine Mischung aus schwach sauren Kationenaustauschern und stark basischen Anionenaustauschern verwendet. Bei den Anionenaustauschern handelt es sich um ein Harz mit funktionellen kationischen Gruppen. Bei den Kationenaustauschern handelt es sich um ein Harz mit funktionellen anionischen Gruppen.

Besonders bevorzugt wird eine Regeneration des Ionenaustauschers durch Rückspülung des lonenaustauscherfilters mit CO₂-haltigem Wasser bei Überschreitung eines festlegbaren Grenzwertes der elektrischen Leitfähigkeit des lonentauscherablaufs ausgelöst.

Dies bedeutet, dass die elektrische Leitfähigkeit des auf der Reinwasserseite des austretenden behandelten Wassers überwacht wird, wobei bei Überschreitung eines festlegbaren Grenzwertes bedarfsweise eine Regeneration des Ionenaustauschers ausgelöst wird. Besonders vorteilhaft ist dabei, dass keine turnusgemäße Durchführung der Regeneration nach einer bestimmten Anzahl Bettvolumina erfolgt, sondern nur bedarfsweise regeneriert und/oder rückgespült wird, sofern die Qualität der Wasseraufbereitung nachlässt und somit eine Regeneration des lonentauscherfilters erforderlich wird. Dies bedeutet eine große Energieeinsparung, da die Regeneration sehr energieintensiv ist. Die elektrische Leitfähigkeit des lonentauscherablaufs ist ein Maß für den Salzgehalt im lonentauscherablauf und damit direkt korreliert mit der Fähigkeit des lonentauscherfilters, die Teilentsalzung des Wassers durchzuführen. Durch die bedarfsweise Auslösung der Regenration kann hierdurch eine erhebliche Energieeinsparung erzielt werden anstelle einer turnusgemäßen Durchführung nach Erreichen einer bestimmten Anzahl von Bettvolumina.

Dadurch, dass die Regeneration der lonenaustauscherfilter bedarfsweise in Abhängigkeit der Wasserqualität des lonentauscherablaufs durchgeführt und zumindest ein Teilstrom CO₂-haltigen Wassers bei der Regenration in einem Kreislauf geführt wird, wird der Energie- und CO₂-Bedarf deutlich vermindert. Vorzugsweise erfolgt dabei eine permanente Überwachung der elektrischen Leitfähigkeit des lonentauscherablaufs nicht nur zur automatischen Auflösung einer Regeneration, sondern ferner zwecks permanenter Qualitätsüberwachung der Trinkwasseraufbereitung.

Derselbe Messwert der elektrischen Leitfähigkeit des lonentauscherablaufs kann zur Regelung der Bypassfahrweise in einem geschlossenen Regelkreis herangezogen werden. Durch eine solche Bypassfahrweise der Wasseraufbereitung, bei der bedarfsabhängig bis zu 100 % des Rohwassermassenstromes mittels der lonentauscherfilter aufbereitet wird, respektive bis zu 90 % des Rohwassermassenstromes über einen Bypass geführt wird, kann eine weitere Energieeinsparung erzielt werden.

Besonders vorteilhaft bei der Vorrichtung zur Enthärtung und/oder Entsalzung von Wasser mittels Ionenaustauscher, wobei die Vorrichtung zumindest einen lonenaustauscherfilter aufweist, der im Filterbetrieb von Rohwasser vorwärts durchströmt wird und wobei und das aufzubereitende Rohwasser mittels des Ionenaustauschers teilenthärtet und/oder teilentsalzt wird, wobei regelmäßig eine Regeneration des lonenaustauscherfilters mittels einer rückwärts gerichteten Durchströmung des lonenaustauscherfilters mit zumindest CO₂-haltigem Wasser durchgeführt wird, ist es, dass die Vorrichtung eine dem lonenaustauscherfilter im Regenrationsbetrieb bei Rückwärtsdurchströmung nachgeschaltete Regenerierwassermembranentsalzung aufweist, mittels derer das bei der Regeneration des lonenaustauscherfilters anfallende CO₂-haltige Abwasser aufbereitet wird, insbesondere dass es sich Regenerierwassermembranentsalzung um eine Nanofiltration und/oder um eine Umkehrosmose handelt.

Das bei einer Regeneration anfallende stark CO₂ haltige Abwasser (Eluat) wird dabei mittels einer Regenerierwassermembranentsalzung aufbereitet. Diese Membranen halten gelöste Ionen zurück, lassen aber gelöste Gase wie etwa CO₂ frei passieren. Deshalb sind die CO₂-Gehalte auf der Roh-, Reinwasserund Konzentratseite in etwa gleich hoch. Das Permeat wird auf die Rohwasserseite der Regeneration zurückgeführt und damit das bei der Regeneration nicht verbrauchte CO₂ im Kreislauf gefahren. Das Konzentrat der Membrananlage wird über den Eluatengaser geführt und für diesen dann deutlich kleineren Teilstrom wird die CO₂ mittels ölfrei verdichtender Aggregate in den Regenerierspeicher zurückgeführt.

Bevorzugt weist die Vorrichtung eine Regenerationspumpe und einen Regenerierspeicher auf, wobei mittels der Regenerationspumpe Rohwasser in den Regenerierspeicher gepumpt wird.

Vorzugsweise ist eine Verbindungsleitung von der Reinwasserseite der im Regenrationsbetrieb bei Rückwärtsdurchströmung nachgeschalteten Regenerierwassermembranentsalzung zur Saugseite der Regenerationspumpe angeordnet, über die das CO₂-haltige Reinwasser der Regenerierwassermembranentsalzung in einem Kreislauf zum Regenerierspeicher geführt werden kann.

Besonders bevorzugt weist die Vorrichtung einen der Regenerierwassermembranentsalzung nachgeschalteten Eluatentgaser und einen CO₂-Verdichter auf, wobei in der Gasphase des Eluatentgasers mittels des Verdichters zumindest ein Teil des Kohlendioxid CO₂ angesaugt und über eine Verbindungsleitung in einen Regenerierspeicher eingeleitet wird.

Vorzugsweise weist die Vorrichtung zumindest eine dem lonenaustauscherfilter im Filterbetrieb nachgeschaltete Reinwassermembranentsalzung auf, mittels derer ein Teil- oder Vollstrom des Reinwassers aufbereitet wird, wobei das CO₂-haltige Abwasser dieser Reinwassermembranentsalzung zur Regeneration eines lonenaustauscherfilters verwendet und über eine Verbindungsleitung in einen Regenerierspeicher eingeleitet wird. Insbesondere kann es sich bei der Reinwassermembranentsalzung um eine Nanofiltration und/oder um eine Umkehrosmose handeln.

Ein Ausführungsbeispiel der Erfindung wird nachfolgend anhand der Figuren erläutert. Es zeigen:
- Fig. 1: Ein vereinfachtes Fließschema einer Wasseraufbereitungsanlage mit mehreren parallelgeschalteten Ionenaustauschern nach dem Stand der Technik;
- Fig. 2: eine schematische Darstellung der Regeneration eines Ionenaustauschers mit im Regenerationsbetrieb nachgeschalteter Regenerierwassermembranentsalzung;
- Fig. 3: eine schematische Darstellung des Filterbetriebs eines Ionenaustauschers mit im Filterbetrieb nachgeschalteter Reinwassermembranentsalzung.

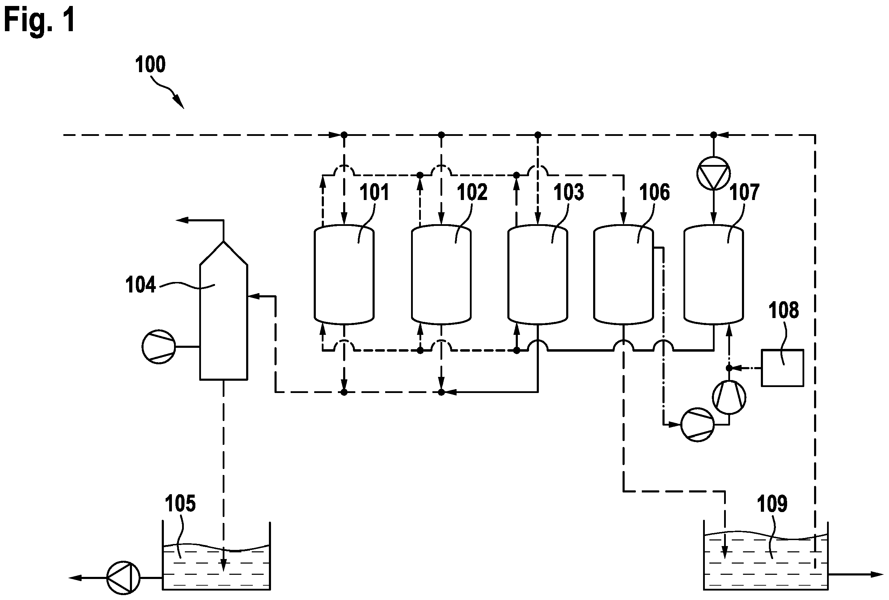

Figur 1 zeigt ein vereinfachtes Fließschema einer Wasseraufbereitungsanlage nach dem Stand der Technik mit mehreren parallelgeschalteten Ionenaustauschern 101, 102, 103. Das Rohwasser durchfließt die lonenaustauscherfilter 101, 102, 103, in deren Filterbett die Teilentsalzung stattfindet (Nitrat-, Sulfat-, Chlorid-, Calcium-, Magnesium-, Karbonathärtereduzierung). Bei der turnusmäßigen Regeneration des Filterbettes werden die an den Austauscherharzen anhaftenden Ionen entfernt und die Austauscherharze wieder in ihren ursprünglichen Zustand gebracht.

In dem in Figur 1 dargestellten Fließschema sind zwei Ionenaustauscher 101, 102 im Filterbetrieb, während einer der Ionenaustauscher 103 im Regenerationsbetrieb ist

Zur Regeneration wird Rohwasser über eine Regenerierpumpe in den Regenerierspeicher 107 gepumpt und mit CO₂ aus der Rückgewinnung und aus einem CO₂-Tank 108 angereichert. Vom Regenerierspeicher 107 wird die Regenerierlösung (CO₂-angereichertes Rohwasser) bei einem Überdruck von ca. 6 bar durch den jeweils zur Regenerierung anstehende Filter 103 gedrückt. Dabei fällt Regenerierwasser an, das als Eluat bezeichnet wird. Das Eluat wird mittels eines Eluatentgasers 106 entgast und dem Eluatspeicher 109 zugeführt.

Das Reinwasser aus den im Filterbetrieb befindlichen Ionenaustauschern 101, 102 wird über einen nachgeschalteten Reinwasserriesler 104 geführt und schließlich dem Reinwasserspeicher 105 zugeführt. Das bei der Beladung im Filterbetrieb entstehende Reaktionsprodukt Kohlenstoffdioxid CO₂ wird im nachgeschalteten Reinwasserriesler 104 aus dem Wasser durch Luftstrippung entfernt.

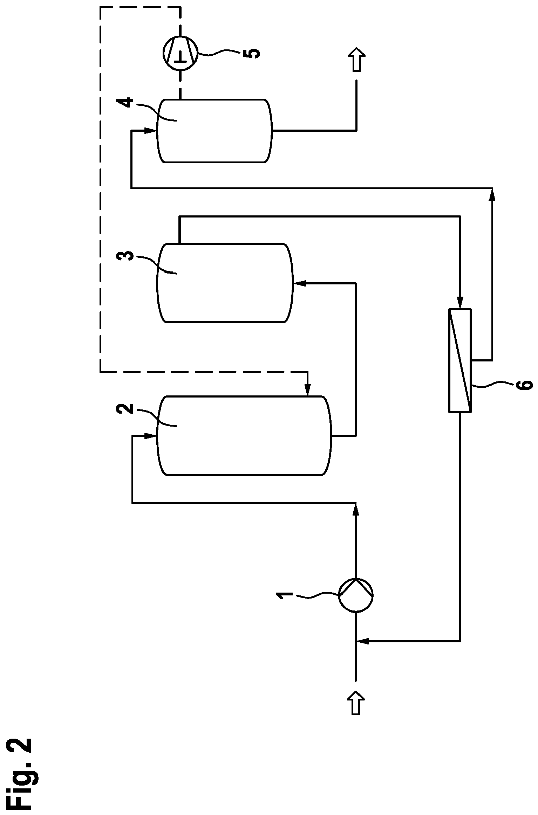

Figur 2 zeigt eine schematische Darstellung der Regeneration eines Ionenaustauschers 3 mit im Regenerationsbetrieb nachgeschalteter Regenerierwassermembranentsalzung 6.

Das bei einer Regeneration anfallende stark CO₂ haltige Regenerierwasser (Eluat) wird mittels einer Membranentsalzung 6 wie beispielsweise Nanofiltration und/oder Umkehrosmose aufbereitet. Diese Membranen halten gelöste Ionen zurück, lassen aber gelöste Gase wie CO₂ frei passieren. Deshalb sind die CO₂ Gehalte auf der Roh-, Reinwasser- und Konzentratseite in etwa gleich hoch. Das Permeat wird auf die Rohwasserseite der Regeneration zurückgeführt und damit das bei der Regeneration nicht verbrauchte CO₂ im Kreislauf gefahren. Das Konzentrat der Membrananlage 6 wird über den Eluatengaser 4 gefahren und für diesen dann kleineren Teilstrom wird das CO₂ mittels ölfrei verdichtender Aggregate in den Regenerierspeicher 2 zurückgeführt.

Bei der Regeneration wird Rohwasser mittels der Regenerierpumpe 1 in den Regenerierspeicher 2 gepumpt und unter einem bestimmten Überdruck mit CO₂ angereichert. Vom Regenerierspeicher 2 wird diese Regenerierlösung bei der Regeneration von unten nach oben durch den Ionenaustauscher 3 gedrückt. Das salzhaltige Regenerierwasser (Eluat), wird anschließend über eine Membranentsalzung 6 geführt. Bei der Membranentsalzung 6 wird mittels Nanofiltrations- und/oder Umkehrosmose-Membranen das Eluat entsalzt, der CO₂-Gehalt sowohl auf der Permeat- als auch Konzentratseite der Membrananlage 6 entspricht dem Zulaufwert. Das entsalzte und CO₂-haltige Permeat wird auf die Saugseite der Regenerierpumpe 1 zurückgeführt. Das bei der Regeneration nicht verbrauchte CO₂ wird somit im Kreislauf gefahren. Das CO₂-haltige Konzentrat wird im Eluatentgaser 4 bei Atmosphäre oder Unterdruck verdüst. In der Gasphase des Eluatentgasers 4 wird mit einem ölfrei verdichtenden Aggregat 5 ca. 80 bis 98% des CO₂ angesaugt und in den Regenerierspeicher 2 zurückgeführt.

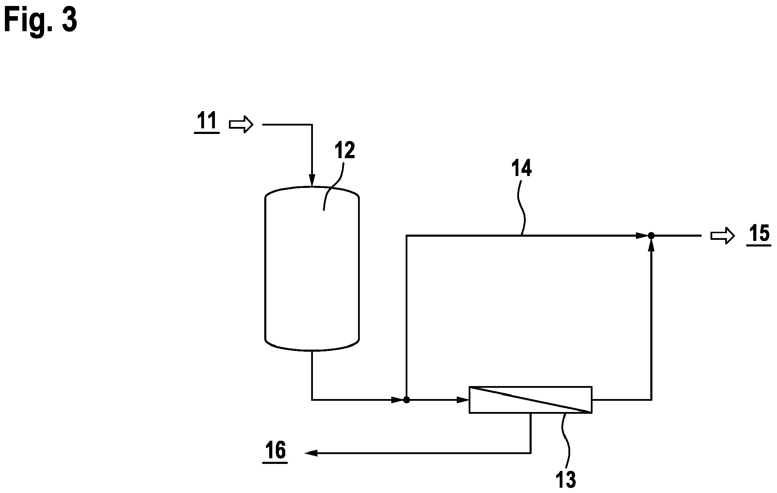

Figur 3 zeigt eine schematische Darstellung des Filterbetriebs eines Ionenaustauschers 12 mit im Filterbetrieb nachgeschalteter Reinwassermembranentsalzung 13.

Durch die Entsalzung (Einsatz von Kationen- und Anionenharz) oder Enthärtung (Einsatz von Kationenharz) des Rohwassers in einem Ionenaustauscher 12 entsteht Kohlenstoffdioxid CO₂. Ein Teil- oder Vollstrom dieses vorentsalzten und CO₂ haltigen Wassers geht anschließend auf eine Membrananlage 13 wie beispielsweise eine Nanofiltration und/oder Umkehrosmose. Auf Grund des niedrigen Salzgehaltes und des gleichzeitig hohen Gehaltes an überschüssigem CO₂ wird das Zulaufwasser der Membrananlage 13 sozusagen vorkonditioniert, d.h. eine zusätzliche Dosierung von Säure oder Antiscalant ist nicht mehr notwendig. Das Reinwasser (Permeat) der Membran 13 wird dem Gesamtreinwasserstrom der Anlage zugeführt und das Abwasser (Konzentrat) wird zur Regeneration eines parallelgeschalteten Ionenaustauschers verwendet. Dadurch wird die Abwassermenge der Ionenaustauscheranlage nicht erhöht und gleichzeitig kann der hohe Druck auf der Konzentratseite der Membran 13 zur Regeneration eines Ionenaustauschers ohne eine weitere Druckerhöhung mittels einer Pumpe unmittelbar genutzt werden, wodurch sich eine erhebliche Energieeinsparung ergibt.

Im aufzubereitenden Wasser können Inhaltsstoffe vorkommen, die nur unzureichend oder gar nicht mit einem Ionenaustauscher 12 reduziert werden können. Dies ist ein weiterer Vorteil der Anordnung einer im Filterbetrieb nachgeschalteter Reinwassermembranentsalzung 13. Hierdurch wird die Qualität der Wasseraufbereitung weiter gesteigert.

Das Rohwasser 11 wird mittels eines ersten Ionenaustauscher 12 entsalzt (Einsatz von Kationen- und Anionenharz) oder enthärtet (Einsatz von Kationenharz). Bei dieser Beladung entsteht Kohlenstoffdioxid CO₂. Ein Teiloder Vollstrom dieses vorentsalzten oder enthärteten Wassers geht anschließend auf eine Membranentsalzung 13 in Form einer Nanofiltration und/oder Umkehrosmose. Das Reinwasser (Permeat) der Reinwassermembranentsalzung 13 wird dem Reinwasserstrom der Gesamtanlage zugeführt und das Abwasser (Konzentrat) wird zur Regeneration eines dem ersten Ionenaustauscher 12 parallelgeschalteten weiteren Ionenaustauschers wiederverwendet und über die Leitung 16 zur Regenration dieses weiteren Ionenaustauschers geleitet. Der nicht über die Reinwassermembranentsalzung 13 geleitete Teilstrom des Reinwassers (Permeat) wird unmittelbar über einen Bypass 14 dem Reinwasserstrom 15 der Gesamtanlage zugeführt.

## Patentansprüche

1. Verfahren zur Enthärtung und/oder Entsalzung von Wasser mittels Ionenaustauscher, wobei Rohwasser zumindest einen lonenaustauscherfilter (3, 12) enthaltend Ionenaustauscher im Filterbetrieb durchströmt und das aufzubereitende Rohwasser mittels des Ionenaustauschers teilenthärtet und/oder teilentsalzt wird, wobei regelmäßig eine Regeneration des lonenaustauscherfilters (3, 12) mittels einer im Regenerationsbetrieb rückwärts gerichteten Durchströmung des lonenaustauscherfilters (3, 12) mit zumindest CO₂-haltigem Wasser durchgeführt wird, **dadurch gekennzeichnet, dass** das bei der Regeneration des lonenaustauscherfilters (3, 12) anfallende CO₂-haltige Abwasser mittels einer im Regenerationsbetrieb nachgeschalteten Regenerierwassermembranentsalzung (6) aufbereitet wird und das CO₂-haltige Wasser der Reinwasserseite der Regenerierwassermembranentsalzung (6) auf die Rohwasserseite der Regeneration zurückgeführt und das bei der Regeneration nicht verbrauchte CO₂ mit dem CO₂-haltigen Wasser im Kreislauf geführt wird.

2. Verfahren nach Anspruch 1, **dadurch gekennzeichnet, dass** das Abwasser der Regenerierwassermembranentsalzung (6) mittels eines nachgeschalteten Eluatentgasers (4) entgast wird, wobei in der Gasphase des Eluatentgasers (4) mittels eines Verdichters zumindest ein Teil des CO₂ angesaugt und in einen Regenerierspeicher (2) eingeleitet wird.

3. Verfahren nach Anspruch 1 oder 2, **dadurch gekennzeichnet, dass** als Ionenaustauscher ein schwach saurer Kationenaustauscher oder ein stark basischer Anionenaustauscher oder eine Mischung aus einem schwach sauren Kationenaustauscher und einem stark basischen Anionenaustauscher eingesetzt wird.

4. Verfahren nach einem der vorherigen Ansprüche, **dadurch gekennzeichnet, dass** es sich bei der Regenerierwassermembranentsalzung (6) um eine Nanofiltration und/oder um eine Umkehrosmose handelt.

5. Verfahren nach einem der vorherigen Ansprüche, **dadurch gekennzeichnet, dass** das zur Regeneration verwendete Rohwasser vor der Einleitung in den lonenaustauscherfilter (3), insbesondere unter einem Überdruck in einem Regenerierspeicher (2), mit CO₂ angereichert wird.

6. Verfahren nach einem der vorherigen Ansprüche, **dadurch gekennzeichnet, dass** mehrere lonenaustauscherfilter (3, 12) parallelgeschaltet sind und zumindest ein lonenaustauscherfilter (12) im Filterbetrieb vorwärts von Rohwasser durchströmt und zumindest ein anderer lonenaustauscherfilter (3) gleichzeitig im Regenerationsbetrieb von CO₂-haltigem Wasser rückwärts durchströmt und regeneriert wird.

7. Verfahren nach einem der vorherigen Ansprüche, **dadurch gekennzeichnet, dass** im Filterbetrieb mittels einer dem lonenaustauscherfilter (12) nachgeschalteten Reinwassermembranentsalzung (13) ein Teil- oder Vollstrom des Reinwassers aufbereitet wird, wobei das CO₂-haltige Abwasser dieser Reinwassermembranentsalzung (13) zur Regeneration eines lonenaustauscherfilters (3) verwendet wird, insbesondere in einen Regenerierspeicher (2) eingeleitet wird.

8. Verfahren nach einem der vorherigen Ansprüche, **dadurch gekennzeichnet, dass** es sich bei der Reinwassermembranentsalzung (13) um eine Nanofiltration und/oder um eine Umkehrosmose handelt.

9. Verfahren nach einem der vorherigen Ansprüche, **dadurch gekennzeichnet, dass** der Ionenaustauscher in Form einer lonenaustauscherschüttung verwendet wird, mittels dessen Feststoffe aus dem Rohwasser gefiltert werden, die bei einer Regeneration und Rückspülung des Ionenaustauschers ausgespült und als Abwasser abgeführt werden.

10. Verfahren nach einem der vorherigen Ansprüche, **dadurch gekennzeichnet, dass** eine Überwachung der elektrischen Leitfähigkeit des Reinwassers des lonenaustauscherfilters (3, 12) erfolgt und eine Regeneration des lonenaustauscherfilters (3, 12) bei Überschreitung eines festlegbaren Grenzwertes der elektrischen Leitfähigkeit des lonentauscherablaufs ausgelöst wird.

11. Vorrichtung zur Enthärtung und/oder Entsalzung von Wasser mittels Ionenaustauscher, wobei die Vorrichtung zumindest einen lonenaustauscherfilter (3, 12) aufweist, der im Filterbetrieb von Rohwasser vorwärts durchströmt wird und wobei und das aufzubereitende Rohwasser mittels des Ionenaustauschers teilenthärtet und/oder teilentsalzt wird, wobei regelmäßig eine Regeneration des lonenaustauscherfilters (3, 12) mittels einer rückwärts gerichteten Durchströmung des lonenaustauscherfilters (3, 12) mit zumindest CO₂-haltigem Wasser durchgeführt wird, **dadurch gekennzeichnet, dass** die Vorrichtung eine dem lonenaustauscherfilter (3, 12) im Regenrationsbetrieb bei Rückwärtsdurchströmung nachgeschaltete Regenerierwassermembranentsalzung (6) aufweist, mittels derer das bei der Regeneration des lonenaustauscherfilters (3, 12) anfallende CO₂-haltige Abwasser aufbereitet wird, insbesondere dass es sich Regenerierwassermembranentsalzung (6) um eine Nanofiltration und/oder um eine Umkehrosmose handelt.

12. Vorrichtung nach Anspruch 11, **dadurch gekennzeichnet, dass** die Vorrichtung eine Regenerationspumpe (1) und einen Regenerierspeicher (2) aufweist, wobei mittels der Regenerationspumpe (1) Rohwasser in den Regenerierspeicher (2) gepumpt wird.

13. Vorrichtung nach Anspruch 11 oder 12, **dadurch gekennzeichnet, dass** eine Verbindungsleitung von der Reinwasserseite der im Regenrationsbetrieb bei Rückwärtsdurchströmung nachgeschalteten Regenerierwassermembranentsalzung (6) zur Saugseite der Regenerationspumpe (1) angeordnet ist, über die das CO₂-haltige Reinwasser der Regenerierwassermembranentsalzung (6) in einem Kreislauf zum Regenerierspeicher (2) geführt werden kann.

14. Vorrichtung nach einem der Ansprüche 11 bis 13, **dadurch gekennzeichnet, dass** die Vorrichtung einen der Regenerierwassermembranentsalzung (6) nachgeschalteten Eluatentgaser (4) und einen CO₂-Verdichter (5) aufweist, wobei in der Gasphase des Eluatentgasers (4) mittels des CO₂-Verdichters (5) zumindest ein Teil des Kohlendioxid CO₂ angesaugt und über eine Verbindungsleitung in einen Regenerierspeicher (2) eingeleitet wird.

15. Vorrichtung nach einem der Ansprüche 11 bis 14, **dadurch gekennzeichnet, dass** die Vorrichtung zumindest eine dem lonenaustauscherfilter (3, 12) im Filterbetrieb nachgeschaltete Reinwassermembranentsalzung (13) aufweist, mittels derer ein Teiloder Vollstrom des Reinwassers aufbereitet wird, wobei das CO₂-haltige Abwasser dieser Reinwassermembranentsalzung (13) zur Regeneration eines lonenaustauscherfilters verwendet und über eine Verbindungsleitung (16) in einen Regenerierspeicher (2) eingeleitet wird, insbesondere dass es sich bei der Reinwassermembranentsalzung (13) um eine Nanofiltration und/oder um eine Umkehrosmose handelt.
